Europäisches Patentamt

European Patent Office

Office européen des brevets

(19)

(11) Veröffentlichungsnummer: **0 309 398 B1**

# EUROPÄISCHE PATENTSCHRIFT

(12)

(45) Veröffentlichungstag der Patentschrift:
**17.07.91 Patentblatt 91/29**

(51) Int. Cl.$^5$: **G11B 23/04, G11B 5/41**

(21) Anmeldenummer: **88810608.5**

(22) Anmeldetag: **07.09.88**

(54) Reinigungskassette für Kassettenbandgeräte.

(30) Priorität: **21.09.87 CH 3641/87**

(43) Veröffentlichungstag der Anmeldung:
**29.03.89 Patentblatt 89/13**

(45) Bekanntmachung des Hinweises auf die
Patenterteilung:
**17.07.91 Patentblatt 91/29**

(84) Benannte Vertragsstaaten:
**AT DE ES FR GB IT SE**

(56) Entgegenhaltungen:
**EP-A- 0 114 115**

(56) Entgegenhaltungen:
**EP-A- 0 193 367**
**DE-A- 3 300 418**
**GB-A- 2 114 358**
**US-A- 4 442 468**

(73) Patentinhaber: **Baumann, Manfred**
**Hinterwiesstrasse 6**
**CH-9444 Diepoldsau (CH)**

(72) Erfinder: **Baumann, Manfred**
**Hinterwiesstrasse 6**
**CH-9444 Diepoldsau (CH)**

(74) Vertreter: **Quehl, Horst M., Dipl.-Ing.**
**Seestrasse 640 Postfach 90**
**CH-8706 Meilen/Zürich (CH)**

EP 0 309 398 B1

**Beschreibung**

Die Erfindung betrifft eine Reinigungskassette für Kassettenbandgeräte mit den Merkmalen des Oberbegriffs des Patentanspruchs 1.

Eine Reinigungskassettte dieser Art ist bekannt durch die DE-A-3 142 139 und die EP-A-0 114 115. Der Reinigungsschieber ist nach diesem Stand der Technik zu dem Zweck vorgesehen, durch den Antrieb mehrere Reinigungsköpfe gleichzeitig zu bewegen. Dabei ist er geradlinig geführt. Um dennoch das Reinigungsorgan über die gekrümmte Oberfläche des Magnetkopfes bewegen zu können, ist dieses elastisch befestigt. Dies hat den Nachteil, dass der Reinigungskontakt entsprechend der Krümmung des Magnetkopfes mit unterschiedlichem Druck ausgeführt wird und die erforderliche elastische Deformation erhöhte Antriebskräfte benötigt.

Durch die GB-A-2 114 358 ist weiterhin eine Reinigungskassette bekannt, die keinen Reinigungsschieber aufweist. Ihr Reinigungsorgan befindet sich am Ende eines Hebels, so dass dessen Schwenkbewegung sogar in einer Krümmungsrichtung erfolgt, die derjenigen des Magnetkopfes entgegengesetzt ist. Somit muss die elastische Ausweichbewegung einen noch grösseren Ausgleichsbereich bewältigen.

Der Erfindung liegt die Aufgabe zugrunde, eine Reinigungskassette der eingangs genannten Art zu finden, die bei einfacher, wenige bewegte Teile aufweisenden Konstruktion, leicht herzustellen ist und die dabei ihre Reinigungsaufgabe zuverlässig und verbessert erfüllen kann. Die Lösung dieser Aufgabe erfolgt aufgrund der kennzeichnenden Merkmale des Patentanspruchs 1.

Für die erfindungsgemässe Reinigungskassette können konstruktive Mittel vorgesehen, um einen gleichmässigen elastischen Andruck des Reinigungsorganes zu erzielen. Aufgrund der durch die Erfindung angepassten Reinigungsbewegung kann dieser in optimaler Anpassung an die Reinigungsbedürfnisse bemessen werden. Weitere vorteilhafte Ausgestaltungen der Erfindung sind Gegenstand der abhängigen Patentansprüche und der folgenden Beschreibung anhand der Zeichnungen zu entnehmen. Es zeigt :

Fig. 1    eine Aufsicht auf eine geöffnete Reinigungskassette eines ersten Ausführungsbeispieles,

Fig. 2    eine Darstellung entsprechend Fig. 1 eines zweiten Ausführungsbeispieles,

Fig. 3    eine Ansicht einer die Reinigungsorgane aufweisenden Schmalseite einer Kassette nach Fig. 1 oder Fig. 2 und

Fig. 4    einen Querschnitt durch die Kassette entlang der Linie IV-IV der Fig. 1.

Das Gehäuse 1 der Reinigungskassette ist aus zwei gleichartig geformten Gehäusehälften 2, 3 gebildet, die an ihren Eckbereichen durch eine Zapfenverbindung 4 oder andere Verbindungsmittel entlang ihrer parallel zur Kassettenebene verlaufenden Teilungsebene 5 zusammengehalten sind, so dass sie die zwischen ihnen eingeschlossenen beweglichen Teile lagern. Die Lagerung der beiden Antriebsräder 6, 7 erfolgt auf gleiche Weise, wie die Spulen einer Tonbandkassette, indem die Eingriffsöffnungen 8, 9 für die Wellen des Kassettenbandgerätes an der Gehäuseinnenseite von einem kreisringförmigen zylindrischen Rand 10, 11 umschlossen sind, der jeweils in eine kreisförmige Vertiefung 12, 13 auf beiden Seiten der Antriebsräder 6, 7 eingreift.

Die Antriebskupplung der Antriebsräder 6, 7 mit den Gerätewellen ist ebenfalls durch deren innere Profilierung 14 gleich ausgeführt wie an den Spulen einer Tonbandkassette, und, wie bei einer solchen, ist es somit möglich auch die Reinigungskassette in zwei verschiedenen Positionen in das Kassettenbandgerät einzusetzen, so dass die Antriebswelle des Kassettenbandgerätes mit dem Antriebsrad 6 oder 7 der Reinigungskassette gekuppelt wird.

Beide Antriebsräder 6, 7 stehen mit einem, bezogen auf die Längsrichtung der länglichen Reinigungskassette, zentral auf zwei Gehäusezapfen 16, 17 gelagerten Kopplungsrad 18 in Antriebsverbindung, so dass zur Verhinderung der automatischen Abschaltung des Kassettenbandgerätes nach Einsetzen der Reinigungskassette über dieses Kopplungsrad 18 auch die zweite Gerätewelle mit angetrieben wird. Die genannte Antriebsverbindung ist beim dargestellten Ausführungsbeispiel durch eine Aussenverzahnung der jeweiligen Räder 6, 7 und 18 verwirklicht, obwohl auch ein Reibrollenantrieb oder Bandantrieb, bzw. ein beliebiger, für die Antriebsverbindung zwischen Rädern bekannter Antrieb im Prinzip anwendbar wäre. In Querrichtung der Kassette ist das Kopplungsrad 18 zwischen dem Reinigungsorgan 20 für den Magnetkopf 21 und der die Drehachsen beider Antriebsräder 6, 7 verbindenden Linie 23 auf den Gehäusezapfen 16, 17 gelagert. Diese Anordnung ist von Vorteil für die kompakte Ausführung des Antriebssystems für den Reinigungsschieber 22, an dem das Reinigungsorgan 20 befestigt ist.

Für den hin- und hergehenden Antrieb des Reinigungsschiebers 22 ist auf einer Seite des Kopplungsrades 18 ein Antriebszapfen 24 angeformt, der exzentrisch zur Drehachse 25 des Kopplungsrades 18 angeordnet ist und somit die Funktion eines Exzenters oder eines Kurbelzapfens ausführt, und dieser Antriebszapfen 24 steht in Eingriff mit einer am Reinigungsschieber 22 angeformten Steuerbahn 26. Diese Steuerbahn ist durch die Innenfläche eines in Form eines länglichen Ringes 27 ausgebildeten Teiles des Reinigungsschiebers 22

2

gebildet, so dass sich beidseitig dieses Ringes 27 in gleicher Linie angeordnete Schieberarme 29, 30 fortsetzen.

Die Führung der Bewegungsbahn des Reinigungsschiebers 22 erfolgt durch an seinen beiden Enden angeformte Mittel, die in Eingriff mit am Kassettengehäuse 1 angeformten Mitteln stehen, so dass der aus Kunststoff und verhältnismässig dünn ausgeführte Reinigungsschieber 22 durch an dem Reinigungsorgan wirkende Kräfte elastisch ausbiegbar ist, ohne dass die Funktion des Antriebssystems nachteilig beeinflusst wird. An beiden Schieberenden sind entsprechend längliche Ringe 31, 32 angeformt, die mit geringem Spiel jeweils einen am Kassettengehäuse 1 angeformten Führungszapfen 33, 34 umschliessen, so dass der Reinigungsschieber 22 durch die an den Führungszapfen 33, 34 gleitenden Innenflächen 35, 36 der Ringe 31, 32 zuverlässig gehalten und geführt ist.

Die Bewegungsbahn des Reinigungsschiebers 22 ist bogenförmig entsprechend der Form des Magnetkopfes 21 ausgebildet, über den das Reinigungsorgan 20 mittels des Reinigungsschiebers 22 hin- und herbewegt wird. Hierfür sind die länglichen Ringe 31, 32 für die Schieberführung, bzw. deren Innenflächen 35, 36 entsprechend der Form des Magentkopfes sichelförmig ausgeführt.

Es versteht sich, dass die Führungsanordnung für den Reinigungsschieber 22 verschieden angeordnet und ausgeführt sein kann. Wegen der bogenförmiger Führung sind jedoch im Querschnitt kreisförmige Führungszapfen 33, 34 vorzuziehen. Diese könnten auch am Reinigungsschieber angeformt sein, wenn eine den Innenflächen 35, 36 entsprechende Führungsbahn am Kassettengehäuse 1 angeformt ist.

Das für den Magnetkopf 21 vorgesehene, aus einem Filzzapfen bestehende Reinigungsorgan 20 ist in eine Fassung 38 eingeklemmt, die an einem verhältnismässig langen Bügel 39 angeformt ist. Der Bügel 39 bildet einen Teil des Reinigungsschiebers 22 und ist mit seinen Enden 40, 41 an den Schieberarmen 29, 30 angeformt. Dabei bildet er mit diesen ein Parallelogramm, das durch Querschnittsverengungen 42, 43 an seinen Eckbereichen nach Art eines Gelenkvierecks elastisch verformbar ist. Ausserdem ist der Bügel 39 aufgrund seiner Länge in Richtung quer zum Reinigungsschieber 22 elastisch ausbiegbar, so dass die beim Reinigen am Reinigungsorgan 20 wirkenden Kräfte elastisch ausgeglichen werden.

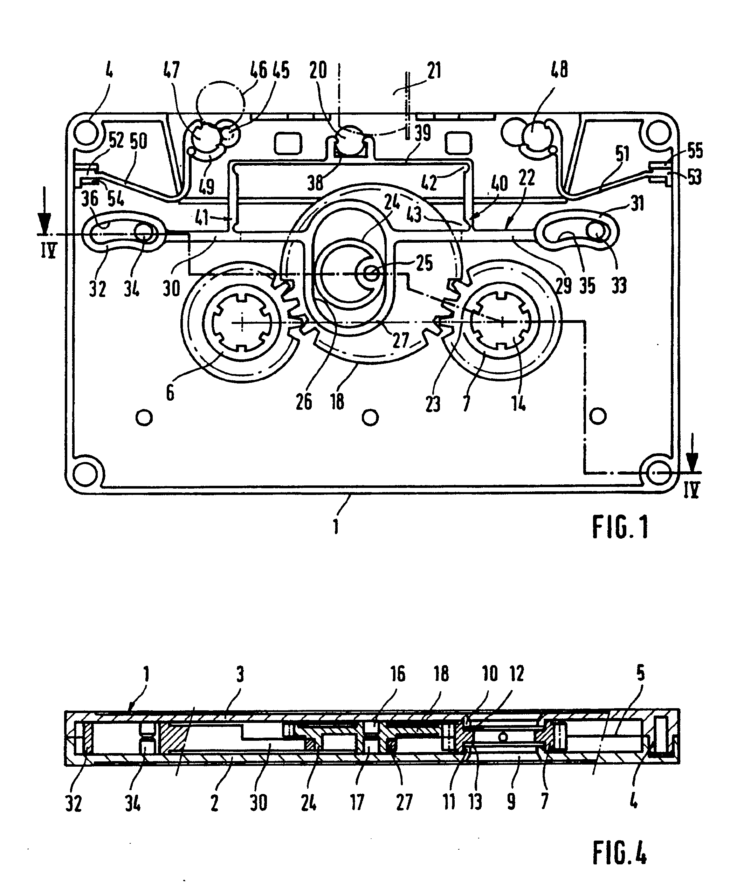

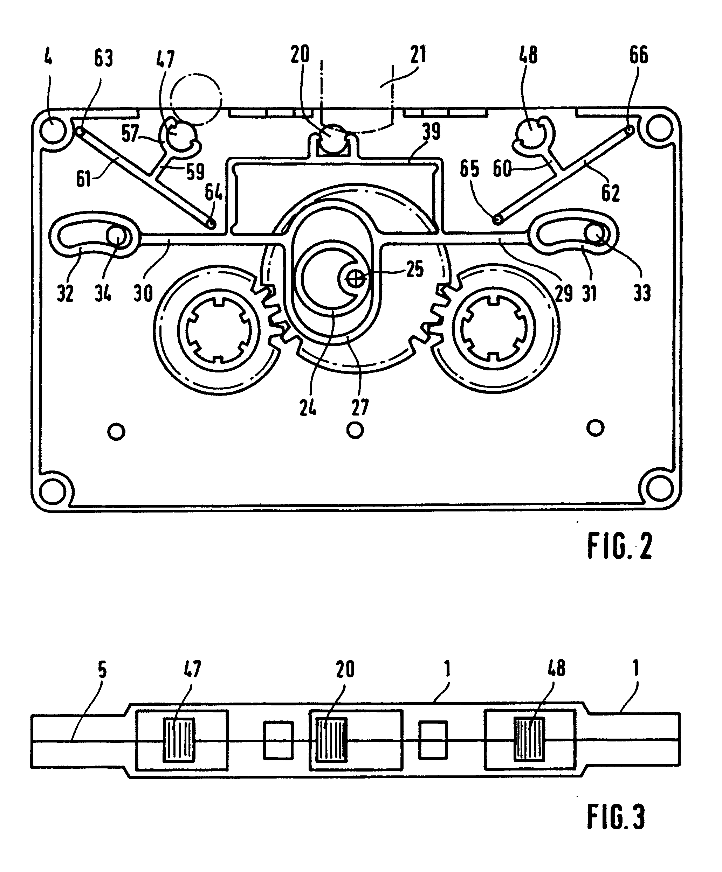

Zum Reinigen der Kapstanwelle 45 und der Andruckrolle 46 ist beidseitig zu dem Reinigungsorgan 20 jeweils ein weiterer Filzzapfen 47, 48 in der Reinigungskassette vorgesehen, von denen je nach Position der Reinigungskassette in dem Kassettenbandgerät einer elastisch gegen die Kapstanwelle 45 und die Andruckrolle 46 angedrückt wird. Die Reinigungsbewegung ergibt sich durch deren Drehbewegung. Die Ausführungsbeispiele der Fig. 1 und 2 unterscheiden sich durch die Art der federelastischen Halterung der Filzzapfen 47, 48.

Gemäss Fig. 1 befindet sich die Klemmfassung 49 am freien Ende eines winkelförmig gekrümmten Federarmes 50, 51, dessen winkelförmiger Fuss 52, 53 in einer entsprechend geformten, am Kassettengehäuse 1 angeformten Winkelfassung 54, 55 lösbar gehalten ist.

Gemäss Fig. 2 ist die Klemmfassung 57 für einen Filzzapfen 47, 48 am Mittelarm 60 eines T-fömigen Steges 61, 62 angeformt, dessen beiden Enden 63, 64 bzw. 65, 66 fest mit dem Kassettengehäuse 1 verbunden sind, so dass sein mittlerer Bereich mit der Klemmfassung 57 federnd ausbiegbar ist.

## Patentansprüche

1. Reinigungskassette für Kassettenbandgeräte, mit zwei Antriebsrädern (6, 7), die in Positionen entsprechend den beiden Spulen einer Tonbandkassette in einem Kassettengehaüse (1) gelagert sind, das die äussere Form einer Tonbandkassette hat, so dass die Antriebsräder (6, 7) mit den beiden Wellen des Kassettenbandgerätes kuppelbar sind, mit einer Antriebsverbindung (18) zwischen den beiden Antriebsrädern (6, 7) und mit einem am Kassettengehäuse (1) geführten, ein Reinigungsorgan (20) tragenden Reinigungsschieber (22), für die Reinigung eines Magnetkopfes (21) des Kassettengerätes, der mit den Antriebsrädern (6, 7) über einen kreisend bewegten Zapfen (24) in Antriebsverbindung steht, dadurch gekennzeichnet, dass der kreisend bewegte Zapfen (24) in Eingriff steht mit einer am Reinigungsschieber (22) angeformten Steuerbahn (26) für die Steuerung seiner Hin- und Herbewegung, und dass die Hin- und Herbewegung des Reinigungsschiebers (22) auf einer gekrümmten Bahn geführt ist, deren Krümmungsrichtung der Form des Magnetkopfes (21) des Kassettenbandgerätes entspricht.

2. Reinigungskassette nach Anspruch 1, dadurch gekennzeichnet, dass der Reinigungsschieber (22) an seinen beiden Schieberarmen (29, 30) auf der gekrümmten Bahn geführt ist.

3. Reinigungskassette nach Anspruch 2, dadurch gekennzeichnet, dass an beiden Enden des Reinigungsschiebers (22) längliche Ringe (31, 32) angeformt sind, die einen am Kassettengehäuse (1) angeformten Führungszapfen (33, 34) umschliessen.

4. Reinigungskassette nach Anspruch 1, dadurch gekennzeichnet, dass der Reinigungsschieber (22) durch den Kontaktdruck des Reinigungsorganes (20) elastisch ausbiegbar ist.

5. Reinigungskassette nach Anspruch 4 oder 7 dadurch gekennzeichnet, dass an dem Reinigungsschieber (22) ein sich parallel zur Schieberichtung erstreckender Bügel (39) angeformt ist, so dass er ein Viereck bildet, wobei in den Eckbereichen des Vierecks Querschnittsverengungen (42, 43 vorgesehen sind, so dass der Bügel (39) in Richtung längs und quer zur Schiebebewegung elastisch verformbar ist.

6. Reinigungskassette nach Anspruch 1, gekennzeichnet durch zwei Reinigungsorgane (47, 48) für die Kapstanwelle (45) und die Andruckrolle (46) des Kassettenbandgerätes, die in Zapfenform in einer Klemmfassung (49) gehalten sind, die am Ende eines winkelförmigen Federarmes (50, 51) angeformt ist.

7. Reinigungskassette nach Anspruch 1, gekennzeichnet durch zwei Reinigungsorgane (47, 48) für die Kapstanwelle und die Andruckrolle (46) des Kassettenbandgerätes, die in Zapfenform in einer Klemmfasung (57) gehalten sind, die an einem Steg (61) angeformt ist, der mit seinen beiden Enden in diagonaler Anordnung am Kassettengehäuse (1) befestigt ist.

## Claims

1. Cleaning cassette for cassette recorders, with two drive wheels (6, 7), which are mounted in a cassette casing (1) in positions corresponding to the two spools of a tape cassette and which has the external shape of such a tape cassette, so that the drive wheels (6, 7) can be coupled to the two shafts of the cassette recorder, with a drive connection (18) between the two drive wheels (6, 7) and with a cleaning slide (22) carrying a cleaning member (20) and guided on the cassette casing (1) and used for cleaning a magnetic head (21) of the tape recorder, which is in driving connection with the drive wheels (6, 7) by means of a revolving pin (24), characterized in that the revolving pin (24) is in engagement with a control path (26) formed on the cleaning slide (22) for controlling its reciprocating movement and that the reciprocating movement of the cleaning slide (22) is guided on a curved path, whose curvature direction corresponds to the shape of the magnetic head (21) of the cassette recorder.

2. Cleaning cassette according to claim 1, characterized in that the cleaning slide (22) is guided by its two slide arms (29, 30) on the curved path.

3. Cleaning cassette according to claim 2, characterized in that on both ends of the cleaning slide (22) are formed oblong rings (31, 32), which surround guide pins (33, 34) formed on the cassette casing (1).

4. Cleaning cassette according to claim 1, characterized in that the cleaning slide (22) can be elastically bent out by the contact pressure of the cleaning member (20).

5. Cleaning cassette according to claims 4 or 7, characterized in that on the cleaning slide (22) is formed a U-shaped member (39) extending parallel to the sliding direction in such a way that it forms a rectangle, cross-sectional reductions (42, 43) being provided in the angles of the rectangle, so that the U-shaped member (39) is elastically deformable longitudinally and transversely with respect to the sliding movement.

6. Cleaning cassette according to claim 1, characterized by two cleaning members (47, 48) for the capstan shaft (45) and the capstan idler (46) of the cassette recorder and which in pin form are held in a clamping holder (49) formed on the end of an angular spring arm (50, 51).

7. Cleaning cassette according to claim 1, characterized by two cleaning members (47, 48) for the capstan shaft (45) and the capstan idler (46) of the cassette recorder, which are held in pin form in a clamping holder (57), which is formed on a web (61), whose two ends are diagonally fixed to the cassette casing (1).

## Revendications

1. Cassette de nettoyage pour magnétophones à cassette, avec deux roues d'entraînement (6, 7), qui sont montées dans des positions correspondant aux deux bobines d'une cassette audio dans un boîtier de cassette (1), lequel a une forme extérieure correspondant à celle d'une cassette audio, de telle sorte que les roues d'entraînement (6, 7) peuvent être accouplées aux deux arbres du magnétophone à cassette, avec une liaison d'entraînement (18) entre les deux roues d'entraînement (6, 7) et avec un coulisseau de nettoyage (22) portant un organe de nettoyage (20) pour le nettoyage d'une tête magnétique (21) du magnétophone à cassette, coulisseau qui, par l'intermédiaire d'un tourillon (24) à mouvement circulaire, est en liaison d'entraînement avec les roues d'entraînement (6, 7), caractérisée en ce que le tourillon (24) à mouvement circulaire est en engagement avec une piste de guidage (26) formée sur le coulisseau de nettoyage (22) pour la commande de son mouvement de va-et-vient, et en ce que le mouvement de va-et-vient du coulisseau de nettoyage (22) est guidé sur une piste incurvée dont la courbure correspond à la forme de la tête magnétique (21) du magnétophone à cassette.

2. Cassette de nettoyage suivant la revendication 1, caractérisée en ce que le coulisseau de nettoyage (22) est guidé à ses deux bras de coulissement (29, 30) sur la piste incurvée.

3. Cassette de nettoyage suivant la revendication 2, caractérisée en ce que aux deux extrémités du coulisseau de nettoyage (22) sont formés des anneaux oblongs (31, 32) qui entourent un tourillon de guidage (33, 34) formé sur le boîtier de cassette (1).

4. Cassette de nettoyage suivant la revendication 1, caractérisée en ce que le coulisseau de nettoyage (22) peut fléchir élastiquement sous l'action de la pression de contact de l'organe de nettoyage (20).

5. Cassette de nettoyage suivant la revendication 4 ou 7, caractérisée en ce que sur le coulisseau de nettoyage (22) est formé un étrier (39) orienté parallèlement à la direction de coulissement, de telle sorte qu'il est formé un rectangle, les zones d'angle du rectangle présentant des sections amincies (42, 43), de telle sorte que l'étrier (39) est déformable élastiquement en direction longitudinale et transversale du mouvement de coulissement.

6. Cassette de nettoyage suivant la revendication 1, caractérisée par la présence de deux organes de nettoyage (47, 48) pour l'arbre de cabestan (45) et le galet d'application (46) du magnétophone à cassette, organes de nettoyage qui sous forme de tourillon sont maintenus dans une monture à serrage (49) formée à l'extrémité d'un bras élastique angulaire (50, 51).

7. Cassette de nettoyage suivant la revendication 1, caractérisée par la présence de deux organes de nettoyage (47, 48) pour l'arbre de cabestan (45) et le galet d'application (46) du magnétophone à cassette, organes de nettoyage qui, sous forme de tourillon, sont maintenus dans une monture à serrage (57) formée sur une entretoise (61) laquelle est, par ses deux extrémités, fixée en orientation diagonale au boîtier de cassette (1).

FIG.1

FIG.4

FIG. 2

FIG. 3